# EUROPEAN PATENT APPLICATION

(11) **EP 2 381 634 A1**
(43) Date of publication of application: **26.10.2011**
(21) Application number: 10275045.2
(22) Date of filing: 20.04.2010
(51) Int. Cl.: H04L 27/20, H04L 27/233

(54) **RF modulation and demodulation**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A method of modulating a data signal comprising: differentially binary encoding (s2) the data signal (20) to provide a differentially binary encoded data signal (26); and performing intermediate frequency to radio frequency, RF, conversion (s4) using the differentially binary encoded data signal (26) as both the in-phase, I, input and the quadrature, Q, input to an intermediate frequency to RF converter. Also, a method of demodulating an RF signal; the method comprising: performing RF to intermediate frequency conversion (s6) on a received differentially binary encoded RF signal (84) to provide an in-phase, I, component (86) and a quadrature, Q, component (88); differentially demodulating (s8) the I component (86), and, separately, differentially demodulating (s8) the Q component (88); combining (s10) the differentially demodulated I component (96) and the differentially demodulated Q component (104); and performing clock and data recovery (s12) on the combined differentially demodulated I and Q components (106).

## Description

### FIELD OF THE INVENTION

The present invention relates to the modulation and demodulation of radio frequency (RF) signals. The present invention is particularly suited to, but not limited to, modulation and demodulation of RF signals for high data rates, for example data rates above 100 Megabits per second.

### BACKGROUND

Conventional modern processes for modulating and demodulating RF signals, applicable to a wide range of data rates (for example several Kbit/s to over 1000 Mbit/s), are typically relatively complex, leading to high power requirements, relatively high cost, and relatively large size and weight of components.

As part of such a conventional modern process the input signal is a digital representation of information (a 'serial bit-stream'). This is typically encoded by mapping it onto a two-dimensional phase-amplitude diagram; each of the permitted combinations of phase and amplitude on this diagram represents a sequence of bits in the input signal. The projection onto two orthogonal axes (referred to as I and Q) of the sequence of the encoded data points results in two further bit-streams which contain all the information in the original input signal. The larger the number of bits of the original signal which are needed to define a point in the phase-amplitude diagram, the lower will be the bit-rate in the resulting I and Q data streams which together represent those points. After the initial encoding process, further encoding may be done so that it is the difference between successive bits which contains the information, rather than the bits themselves.

After encoding, the I and Q bit-streams are used to modulate a carrier frequency, generated by a local oscillator. There are a variety of known means to achieve this, but for wireless transfer of the data, the aim is to generate a waveform, usually involving an up-conversion (using a second local oscillator) of the abovementioned carrier (known as the Intermediate Frequency (IF)) to one which can be transmitted from an antenna, and then received at a remote antenna. On reception, a down-conversion and demodulation process takes place, followed by decoding to obtain the signal which formed the original input.

It is apparent that the process described above can be complicated, not least because of the need to build carrier recovery circuits at the receiver (because in practice the frequencies of the transmit and receive local oscillators will not be identical) to enable the down-conversion process to be one which allows the information to be extracted. The number and complexity of the components often results in a combination of power consumption, weight, size and cost which may prove prohibitive or undesirable.

Some simplifications are possible. For example, a two-state rather than a multi-state phase-amplitude diagram can be used. This is achieved if the original bit-stream is split equally, and these are used as the I and Q signals. Another simplification is to use only one local oscillator, so that the I and Q signals are used to modulate the wireless carrier frequency (referred to as a zero-IF scheme). However, when the data rate can vary widely, a carrier recovery process is still required at the receiver.

Analogue modulation techniques have been known for many years, and pre-date modern digital modulation/demodulation techniques. The analogue techniques always generate a carrier-based waveform, modulated by the 'baseband' input waveform. A range of modulation techniques is available.

Demodulation of binary differentially modulated signals, when implemented in analogue form, can be done by splitting the received signal into two paths and introducing a delay into one of the paths, before multiplying the delayed and the un-delayed signal. This only requires analogue components, and is a much simpler process than the equivalent digital scheme, though it lacks some of the flexibility which the latter can provide under some circumstances.

### SUMMARY OF THE INVENTION

The present inventors have surprisingly thought to apply the established analogue technique of differential encoding/decoding in a completely new way by disregarding the conventionally necessary approach of applying the technique to a non-zero intermediate frequency form of the RF signal, under circumstances when the data is digital binary encoded and when the data rate is sufficiently high that it well exceeds the (undesired but inevitable) difference between the frequencies of the local oscillators at the transmit and receive stations. The present inventors in contrast apply a form of the technique separately to each of the (I and Q) signals which emerge from a conventional frequency down-conversion process. The result is a method for demodulation of a digital waveform which avoids the need for a carrier recovery process and can be implemented using only a small number of analogue components, thereby tending to produce benefits in power consumption, cost, size and weight compared with a conventional digital process. As will be shown below, it is beneficial, after applying the technique to both the I and Q outputs from the down-converter, to combine them in an analogue adder to overcome the problem of slow fading that results from the local oscillator frequency difference.

This has particular relevance to the increasing demand for data rates in excess of 1000 Mbit/s, which in turn need high carrier frequencies to provide sufficient bandwidth for the data while the fractional bandwidth is sufficiently small that conventional antenna or other RF path components may be used. At carrier frequencies above, say 30 GHz, these characteristics are found, as well as the availability of frequency control techniques that provide frequency offsets between two oscillators that are small compared with the high data rate.

In a first aspect the present invention provides a method of modulating a data signal; the method comprising: differentially binary encoding the data signal to provide a differentially binary encoded data signal; and performing intermediate frequency to radio frequency, RF, conversion using the differentially binary encoded data signal as both the in-phase, I, input and the quadrature, Q, input to an intermediate frequency to RF converter.

In a further aspect, the present invention provides a method of demodulating a radio frequency, RF, signal; the method comprising: performing RF to intermediate frequency conversion on a received differentially binary encoded RF signal to provide an in-phase, I, component and a quadrature, Q, component; and differentially demodulating the I component, and, separately, differentially demodulating the Q component. The method of demodulating may further comprise combining the differentially demodulated I component and the differentially demodulated Q component. The method of demodulating may further comprise performing clock and data recovery on the combined differentially demodulated I and Q components.

In a further aspect, the present invention provides a method of radio frequency, RF, communication; the method comprising: modulating a data signal to provide an RF signal using the method of the first aspect above; transmitting the RF signal; receiving the RF signal; and demodulating the received RF signal using the method of the further aspect above.

In any of the above aspects, the data rate of the data signal may be greater than or equal to 100 Megabits per second.

In any of the above aspects, the data rate of the data signal may be greater than or equal to 1000 Megabits per second.

In any of the above aspects, the RF frequency may be equal to or greater than 30 GHz.

In any of the above aspects, the RF frequency may be equal to or greater than 60 GHz.

In any of the above aspects, the RF signal may be being used for transmitting and receiving point-to-point.

In a further aspect, the present invention provides a modulator for modulating a data signal; the modulator comprising: a differential binary encoder; and a device for performing intermediate frequency to radio frequency, RF, conversion, the device having an in-phase, I, input and a quadrature, Q, input.

In a further aspect, the present invention provides a demodulator for demodulating a radio frequency, RF, signal; the demodulator comprising: a device for performing RF to intermediate frequency conversion, the device having an in-phase, I, component output and a quadrature, Q, component output; a first differential demodulator for decoding the I component; and a second differential demodulator for decoding the Q component; the first differential demodulator being separate from the second differential demodulator. The demodulator may further comprise a combiner for combining the differentially demodulated I component and the differentially demodulated Q component. The demodulator may further comprise a carrier data recovery device for performing carrier data recovery on the combined differentially demodulated I and Q components.

In a further aspect, the present invention provides a system for radio frequency, RF, communication; the system comprising: a modulator according to the above aspect for modulating a data signal to provide an RF signal; a transmitter for transmitting the RF signal; a receiver for receiving the RF signal; and a demodulator according to the above aspect for demodulating the received RF signal.

### BRIEF DESCRIPTION OF THE DRAWINGS

Figure 1 is a block diagram of an RF transmission system.
Figure 2 is a block diagram of an RF reception system.
Figure 3 shows certain process steps of a method of modulating a data signal.
Figure 4 shows certain process steps of a method of demodulating an RF signal.

### DETAILED DESCRIPTION

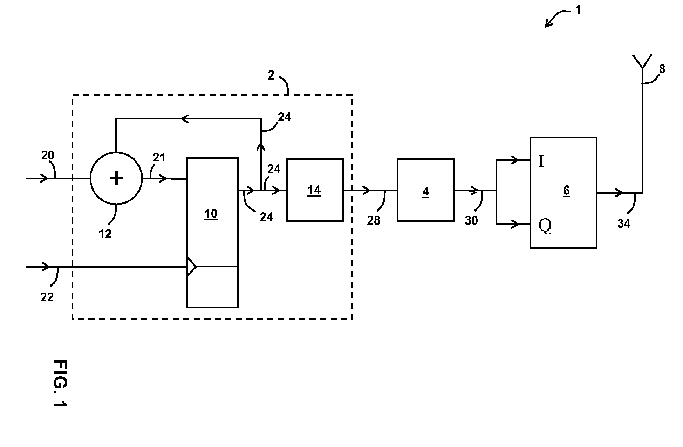

Figure 1 is a block diagram of a first embodiment of an RF transmission system 1. The RF transmission system 1 comprises the following elements connected in series: a differential binary encoder 2, a channel filter 4, a zero intermediate frequency (IF) to RF conversion module 6, and a transmission antenna 8.

The differential binary encoder 2 comprises a flip-flop 10, an exclusive OR gate 12, and a logic level to bi-polar module 14. Two inputs are provided to the flip-flop 10. Also, two inputs are provided to the exclusive OR gate 12.

In operation, a data signal 20 is applied to one input of the exclusive OR gate 12. The output signal 21 from the exclusive OR gate 12 is input into one of the inputs of the flip-flop 10. A clock signal 22 is applied to the other input of the flip-flop 10. The output signal 24 from the flip-flop 10 is fed-back to the other input of the exclusive OR gate 12, i.e. the exclusive OR gate 12 operates to combine the data signal 20 with the output signal 24 from the flip-flop 10. The output signal 24 from the flip-flop 10 is thus a differentially encoded form of the data signal 20. The output signal 24 from the flip-flop 10 (i.e. the differentially encoded form of the data signal 20) is also input to the logic to bi-polar module 14. The logic to bi-polar module 14 converts the logic signal to a bi-polar analogue signal. In this embodiment the logic to bi-polar module 14 is simply a capacitor. The bi-polar form of the differentially encoded data constitutes the output of the differential binary encoder 2, and effectively provides what may be considered as a notional wideband zero intermediate frequency (IF) output 28.

The notional wideband zero intermediate frequency (IF) output 28 is input to the channel filter 4. The channel filter 4 filters out high frequency components, e.g. components above the Nyquist rate. One option to further improve performance is to improve or optimise the filter response by including an element of x/(sin(x)) correction to improve the spectrum efficiency. A further consideration is that in many instances the slew rate limitations of the rest of the circuitry of the RF transmission system 1 may in fact reduce the bandwidth sufficiently, in which case the separate channel filter 4 may be omitted. The output of the channel filter 4 may be considered as the filtered IF output 30.

Two inputs are provided to the zero intermediate frequency (IF) to RF conversion module 6, namely an I input and a Q input. The zero intermediate frequency (IF) to RF conversion module 6 contains a local oscillator, and performs the function of up-converting the input signals to a modulated RF signal for wireless transmission. It is a conventional intermediate frequency to RF conversion module, which in conventional circuits would be employed to process separate I and Q inputted signals. An example of one such conventional circuit is a conventional RF device as used in a conventional laptop WiFi module, i.e. the RF device that when used conventionally in a WiFi module is coupled to, for example, the analogue output of a digital MAC (medium access control) device of the WiFi module. However, as the transmission is simple bi-phase modulation the filtered IF output 30 is split into two paths and each respective path is fed into a respective one of the I and Q inputs of the zero intermediate frequency (IF) to RF conversion module 6. The resultant RF signal is then modulated with binary phase shift keying conveying the data.

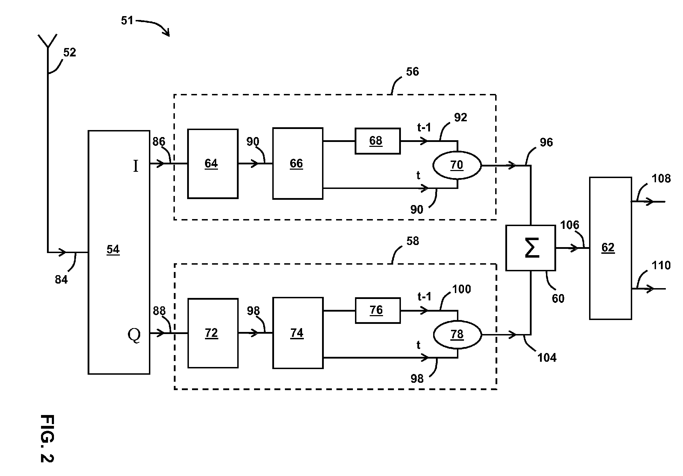

Accordingly the output from the zero intermediate frequency (IF) to RF conversion module 6 is an RF transmission signal 34 suitable for transmission by the transmission antenna 8, for example to be received by an RF reception system of the type that will now be described with reference to Figure 2.

Figure 2 is a block diagram of a first embodiment of an RF reception system 51. The RF transmission system 51 comprises the following elements: a reception antenna 52, an RF to zero intermediate frequency (IF) conversion module 54, an I channel differential demodulator 56, a Q channel differential demodulator 58, a combiner 60, and a clock and data recovery (CDR) device 62.

The reception antenna 52 is connected to the input of the RF to zero IF conversion module 54. The RF to zero IF conversion module 54 contains a local oscillator which is nominally at the same frequency as the local oscillator incorporated in the IF to RF conversion module 6. These two oscillators are not coherent and may have a frequency difference between them. It is only required that such difference is small compared with the bit rate of the data being carried by the modulated RF signal. The RF to zero IF conversion module 54 has two outputs, namely an I output and a Q output. The I output is connected to the I channel differential demodulator 56. The Q output is connected to the Q channel differential demodulator 58. The combiner 60 is provided with two inputs. The output of the I channel differential demodulator 56 is connected to a first input of the combiner 60. The output of the Q channel differential demodulator 58 is connected to the second input of the combiner 60. The output of the combiner 60 is connected to the input of the CDR device 62.

The I channel differential demodulator 56 comprises a channel filter 64, a splitter 66, a delay line 68, and a multiplier 70. The channel filter 64 is connected at its input to the above mentioned I output of the RF to zero intermediate frequency (IF) conversion module 54. The output of the channel filter 64 is connected to the input of the splitter 66. The splitter 66 is provided with two outputs. One of the outputs of the splitter 66 is connected to the input of the delay line 68. The multiplier 70 is provided with two inputs. The output of the delay line 68 is connected to one of the inputs of the multiplier 70. The other output of the splitter 66 is connected directly to the other input of the multiplier 70. The output of the multiplier 70 is connected to the above mentioned first input of the combiner 60.

The Q channel differential demodulator 58 comprises a channel filter 72, a splitter 74, a delay line 76, and a multiplier 78. The channel filter 72 is connected at its input to the above mentioned Q output of the RF to zero intermediate frequency (IF) conversion module 54. The output of the channel filter 72 is connected to the input of the splitter 74. The splitter 74 is provided with two outputs. One of the outputs of the splitter 74 is connected to the input of the delay line 76. The multiplier 78 is provided with two inputs. The output of the delay line 76 is connected to one of the inputs of the multiplier 78. The other output of the splitter 74 is connected directly to the other input of the multiplier 78. The output of the multiplier 78 is connected to the above mentioned second input of the combiner 60.

In operation, an RF signal 84 is received by the reception antenna 52. The received RF signal 84 may, for example, be the received form of the RF transmission signal 34 described above with reference to Figure 1. The received RF signal 84 is input to the RF to zero IF conversion module 54.

The RF to zero IF conversion module 54 is a conventional RF to intermediate frequency conversion module, which in conventional circuits would be employed to provide, from an input RF signal, separate I and Q components of that input signal at a nominally zero intermediate frequency. An example of one such conventional circuit is a conventional RF device as used in a conventional laptop WiFi module, i.e. the RF device that when used conventionally in a WiFi module is coupled to e.g. the analogue output of a digital MAC (medium access control) device of the WiFi module. The RF to zero IF conversion module 54 provides separate I and Q components at a nominal zero intermediate frequency, i.e. an intermediate frequency whose mean value is close to zero. The I component 86 output by the RF to zero IF conversion module 54 is input to the channel filter 64 of the I channel differential demodulator 56. The Q component 88 output by the RF to zero IF conversion module 54 is input to the channel filter 72 of the Q channel differential demodulator 58.

Considering first the I component 86, this is low pass filtered by the channel filter 64 to output a filtered I component 90. In this embodiment, the channel filter 64 is a simple low pass filter.

The filtered I component 90 is input into the splitter 66. One output of the splitter 66 inputs the filtered I component 90 directly into one input of the multiplier 70. The other output of the splitter 66 inputs the filtered I component 90 into the delay line 68, which is a transmission delay line arranged to provide a 1-bit delay. In this embodiment, the delay line 68 is implemented in the form of a length of cable. The output from the delay line 68 is thus a 1-bit delayed filtered I component 92, which is input to the other input of the multiplier 70. The multiplier 70 multiplies together the filtered I component 90 and the 1-bit delayed filtered I component 92 to provide a component output 96 that is the differentially demodulated form of the I component. In this embodiment the multiplier 70 is implemented in the form of a double balanced diode mixer, which readily achieves the required multiplication of the signals with the 1-bit delay. However, in other embodiments the multipliers may be implemented by other means, for example by active semiconductor mixers.

The I component output 96 is input to one input of the combiner 60.

Considering now the Q component 88, this is low pass filtered by the channel filter 72 to output a filtered Q component 98. In this embodiment, the channel filter 72 is a simple low pass filter.

The filtered Q component 98 is input into the splitter 74. One output of the splitter 74 inputs the filtered Q component 98 directly into one input of the multiplier 78. The other output of the splitter 74 inputs the filtered Q component 98 into the delay line 76, which is a transmission delay line arranged to provide a 1-bit delay. In this embodiment, the delay line 76 is implemented in the form of a length of cable. The output from the delay line 76 is thus a 1-bit delayed filtered Q component 100, which is input to the other input of the multiplier 78. The multiplier 78 multiplies together the filtered Q component 98 and the 1-bit delayed filtered Q component 100 to provide a component output 104 that is the differentially demodulated form of the Q component. In this embodiment the multiplier 78 is implemented in the form of a double balanced diode mixer, which readily achieves the required multiplication of the signals with the 1-bit delay. However, in other embodiments the multipliers may be implemented by other means, for example by active semiconductor mixers.

The Q component output 104 is input to the other input of the combiner 60.

The combiner 60 combines the I component output 96 and the Q component output 104. In this embodiment the combiner 60 is an adder, and hence the output from the combiner 60 is a summed signal, i.e. a summed I and Q component output 106.

The summed I and Q component output 106 is input into the CDR device 62. The CDR device 62 is a conventional clock and data recovery device that is conventionally used for data links such as high-speed optical fibre data links. Here, the CDR device 62 operates on the summed I and Q demodulated component output 106, which is in effect an analogue bit stream carrying data, to determine (and extract) the clock from the data, and based on the determined clock, determine each effective bit of data's binary value. Accordingly the CDR device 62 outputs the determined clock 108 and the retrieved data 110, whereby the retrieved data 110 is thus the demodulated data 110.

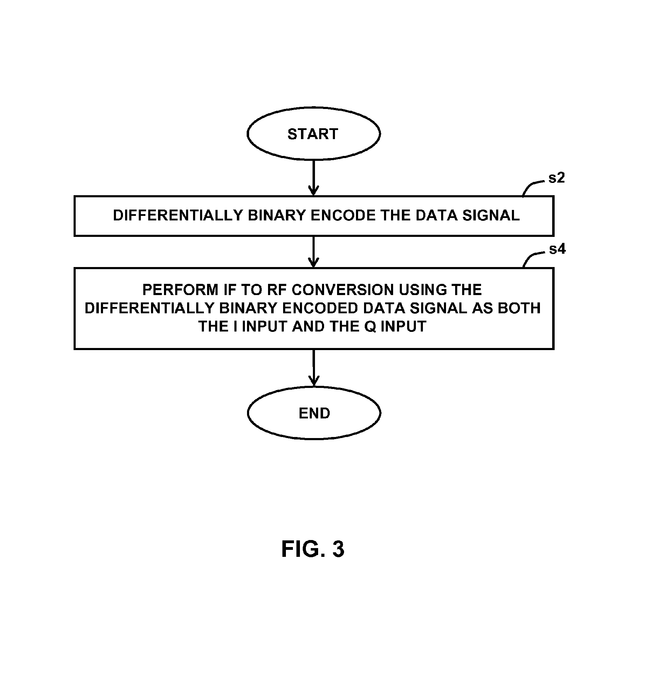

Thus, as described above, an embodiment of a method of modulating a data signal is provided. Certain process steps of this method are shown in Figure 3. At step s2, the data signal is differentially binary encoded to provide a differentially binary encoded data signal. At step s4, intermediate frequency (IF) to radio frequency (RF) conversion is performed using the differentially binary encoded data signal as both an in-phase (I) and a quadrature (Q) input.

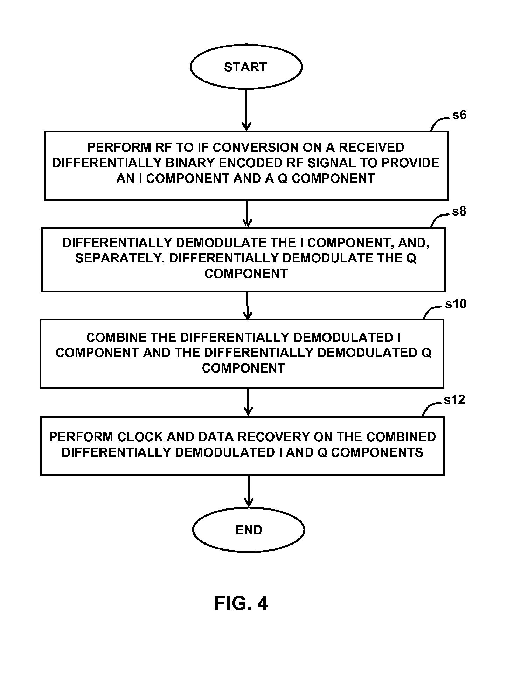

Also, as described above, an embodiment of a method of demodulating a radio frequency (RF) signal is provided. Certain process steps of this method are shown in Figure 4. At step s6, RF to intermediate frequency (IF) conversion on a received differentially binary encoded RF signal is performed to provide an in-phase (I) component and a quadrature (Q) component. At step s8, the I component is differentially demodulated, and, separately, the Q component is differentially demodulated. At step s10, the differentially demodulated I component and the differentially demodulated Q component are combined. At step s12, clock and data recovery is performed on the combined differentially demodulated I and Q components.

In the above embodiment of an RF transmission system, the differentially encoded form of the data signal 20 is provided by the circuit arrangement shown in Figure 1. However, this need not be the case, and in other embodiments, a differentially encoded form of the data signal 20 may provided by any other appropriate circuit arrangement.

In the above embodiment of an RF transmission system, the logic to bi-polar module 14 is a capacitor. However, in other embodiments, other means of performing logic to bi-polar conversion may be used, for example and active amplifier. Alternatively, in other embodiments, the data may already be in bi-polar form, in which case no logic to bi-polar module is employed.

In the above embodiment of an RF transmission system, the zero intermediate frequency to RF conversion module 6 is a conventional RF device as used in a conventional laptop WiFi module, as described earlier above. However, in other embodiments other modules or devices may be used, for example a 60 GHz RF transmitter unit such as those available from Vµblq Inc. (trademark), e.g. a SiGe transmitter with part number V60TXWG1 as available from Vubiq, Inc. (trademark) of 65 Enterprise, Aliso Viejo, California 92656, USA.

In the above embodiment of an RF reception system, the RF to zero intermediate frequency conversion module 54 is a conventional RF device as may be used in a conventional laptop WiFi module, as described earlier above. However, in other embodiments other modules or devices may be used, for example a 60 GHz RF receiver unit such as those available from Vµblq Inc. (trademark), e.g. a SiGe receiver with part number V60RXWG1 as available from Vubiq, Inc. (trademark) of 65 Enterprise, Aliso Viejo, California 92656, USA.

In the above embodiment of an RF reception system, the delay lines are implemented in the form of a length of cable. The length of cable is chosen according to the desired delay and/or intended data rate. A shorter length of transmission line achieving a given delay may be used by making the delay line on a substrate of a material with a high dielectric constant. More generally, delay lines as such need not be used, and instead any other appropriate means for providing the required delay may be used.

In the above embodiment of an RF reception system, the summed I and Q demodulated components 106 are input into a CDR device as a form of termination. Another possibility is that no dedicated termination is provided, i.e. the CDR device 62 may be omitted, and instead the summed I and Q components 106 are input directly into or otherwise made available to a further intermediate or end process or arrangement. One embodiment of this is provided by steps s6 to s10 of the method shown in Figure 4, i.e. step s12 may be omitted. It may even be the case that such an intermediate or end process or arrangement will make separate use of the I component output 106 and the Q component output 104, in which case both the CDR device 62 and the combiner 60 may be omitted. One embodiment of this is provided by steps s6 and s8 of the method shown in Figure 4, i.e. steps s10 and s12 may both be omitted.

More generally, although particular forms and designs of differential binary encoder and differential demodulator have been described for the above embodiments, nevertheless, in other embodiments, other forms or specific designs of differential binary encoder and/or differential demodulator may be used instead.

The above embodiments tend to advantageously allow relatively simple circuitry to be employed, with relatively low power requirements, at relatively low cost of components and relatively low weight.

Such advantages are particularly prevalent for high data rates and/or high RF frequencies, for example for data rates at or above 100 Megabits per second and/or at microwave RF frequencies, and more particularly for data rates at or above 1000 Megabits per second and/or RF frequencies at or above 30 GHz, and even more particularly for RF frequencies at or above 60 GHz.

A further aspect, realised by the inventors, related to the use of high data rates, for example for data rates at or above 100 Megabits per second, and more particularly for data rates at or above 1000 Megabits per second, is as follows. When the data is of a high data rate, the time for one bit of data is relatively short. In typical implementations of the zero IF to RF conversion module 6 and the RF to zero IF conversion module 54, the Radio Frequency inaccuracy, due, for example, to the differences in the frequencies of the internal oscillators, will tend to be small compared with the bit rate of such a high data rate system. Therefore any phase slippage between the I and Q components (i.e. the variation between the angles of the vector representations of the components) caused by frequency errors at the terminals is relatively small. Moreover, the effect of any such slippage, and consequent variation between the I and Q components, will tend to be compensated or cancelled out, at least to some extent, by virtue of the adding of the I component output to the Q component output.

The present invention is particularly advantageous when implemented using highly directed antennas, i.e. in further embodiments the transmission antenna 8 (and optionally the reception antenna 52) is a highly directed antenna (i.e. an antenna that transmits a narrow beam). Such an arrangement may be employed, for example, to provide so-called "covert radio" transmission and reception, i.e. where the transmitted signal is directed to the location of the intended reception antenna but is substantially not transmitted elsewhere, thus providing that only the intended recipient receives the signal (which may also be termed "point-to-point"). A characteristic of the use of a highly directed antenna is that the RF signal will tend to propagate principally along only one path, rather than becoming a multi-path signal. This provides synergy with the above described embodiments of RF modulation and demodulation which are relatively simple, because in the absence multi-path reception there is no need to use complex modulation or other compensation schemes, to cope with the multi-path aspects of conventional complex systems, hence maintaining the benefits of the relative simplicity of the above embodiments.

Further in relation to point-to-point use, yet more synergy is provided by the use of Radio frequencies e.g. millimetric frequencies, particularly Radio frequencies at or above 30 GHz, and even more particularly frequencies at or above 60 GHz, since these allow relatively small antenna sizes, even when the antenna is highly directional. Yet further synergy is provided by the use of the Radio Frequency values mentioned in this paragraph, since they are absorbed by the air (strongly in the case of 60 GHz frequencies), and hence are particularly useful for covert radio applications.

## Claims

1. A method of modulating a data signal; the method comprising:
differentially binary encoding (s2) the data signal (20) to provide a differentially binary encoded data signal (26); and
performing intermediate frequency to radio frequency, RF, conversion (s4) using the differentially binary encoded data signal (26) as both the in-phase, I, input and the quadrature, Q, input to an intermediate frequency to RF converter.

2. A method of demodulating a radio frequency, RF, signal; the method comprising:
performing RF to intermediate frequency conversion (s6) on a received differentially binary encoded RF signal (84) to provide an in-phase, I, component (86) and a quadrature, Q, component (88); and
differentially demodulating (s8) the I component (86), and, separately, differentially demodulating (s8) the Q component (88).

3. A method according to claim 2, further comprising combining (s10) the differentially demodulated I component (96) and the differentially demodulated Q component (104).

4. A method according to claim 3, further comprising performing clock and data recovery (s12) on the combined differentially demodulated I and Q components (106).

5. A method of radio frequency, RF, communication; the method comprising:
modulating a data signal to provide an RF signal using the method of claim 1;
transmitting the RF signal;
receiving the RF signal; and
demodulating the received RF signal using the method of any of claims 2 to 4.

6. A method according to any of claims 1 to 5, wherein the data rate of the data signal (20) is greater than or equal to 100 Megabits per second.

7. A method according to claim 6, wherein the data rate of the data signal (20) is greater than or equal to 1000 Megabits per second.

8. A method according to any of claims 1 to 7, wherein the RF frequency is equal to or greater than 30 GHz.

9. A method according to claim 8, wherein the RF frequency is equal to or greater than 60 GHz.

10. A method according to any of claims 1 to 9, wherein the RF signal (34, 84) is used for transmitting and receiving point-to-point.

11. A modulator for modulating a data signal; the modulator comprising:
a differential binary encoder (2); and
a device (6) for performing intermediate frequency to radio frequency, RF, conversion, the device (6) having an in-phase, I, input and a quadrature, Q, input.

12. A demodulator for demodulating a radio frequency, RF, signal; the demodulator comprising:
a device (54) for performing RF to intermediate frequency conversion, the device (54) having an in-phase, I, component output and a quadrature, Q, component output;
a first differential demodulator (56) for decoding the I component; and
a second differential demodulator (58) for decoding the Q component;
the first differential demodulator (56) being separate from the second differential demodulator (58).

13. A demodulator according to claim 12, further comprising a combiner (60) for combining the differentially demodulated I component and the differentially demodulated Q component.

14. A demodulator according to claim 13, further comprising a carrier data recovery device (62) for performing carrier data recovery on the combined differentially demodulated I and Q components.

15. A system for radio frequency, RF, communication; the system comprising:
a modulator according to claim 1 for modulating a data signal to provide an RF signal;
a transmitter for transmitting the RF signal;
a receiver for receiving the RF signal; and
a demodulator according to any of claims 12 to 14 for demodulating the received RF signal.
